# EUROPÄISCHE PATENTSCHRIFT

(11) **EP 2 622 197 B1**
(45) Veröffentlichungstag und Bekanntmachung des Hinweises auf die Patenterteilung: **23.01.2019**
(21) Anmeldenummer: 11749742.0
(22) Anmeldetag: 26.08.2011
(51) Int. Cl.: F02F 7/00, B23P 13/00

(54) **VERFAHREN ZUR HERSTELLUNG EINER VENTILATIONSBOHRUNG IN EINEM LAGERSTUHL EINES KURBELGEHÄUSES EINER HUBKOLBEN-BRENNKRAFTMASCHINE**
METHOD FOR PRODUCING A VENTILATION BORE IN A THRUST BEARING OF A CRANKCASE OF A RECIPROCATING INTERNAL COMBUSTION ENGINE
PROCÉDÉ DE FABRICATION D'UN PERÇAGE DE VENTILATION DANS UN PALIER DE BUTÉE DE CARTER DE VILEBREQUIN D'UN MOTEUR À COMBUSTION INTERNE À PISTONS ALTERNATIFS

(30) Priorität: 01.10.2010 DE 102010041840
(43) Veröffentlichungstag der Anmeldung: 07.08.2013
(73) Patentinhaber: Bayerische Motoren Werke Aktiengesellschaft, 80809 München (DE)
(72) Erfinder: TÄNZER, Lars, 85716 Unterschleißheim (DE); KRÖNINGER, Hans-Rainer, 85716 Unterschleißheim (DE)
(74) Vertreter: Diener, Reinhold Jürgen
(86) Internationale Anmeldenummer: PCT/EP2011/004300
(87) Internationale Veröffentlichungsnummer: WO 2012/041429

(56) Entgegenhaltungen:
- DE-A1- 3 727 670
- DE-A1-102008 058 583
- JP-A- 2002 168 108
- US-A- 5 080 056
- US-A1- 2004 107 571
- US-A1- 2005 045 121
- US-A1- 2005 045 121

## Beschreibung

Die Erfindung betrifft ein Verfahren zur Herstellung einer Ventilationsbohrung in einem Lagerstuhl eines Kurbelgehäuses einer Hubkolben-Brennkraftmaschine mit den Merkmalen aus dem Oberbegriff des Patentanspruchs 1.

Zum technischen Umfeld wird beispielsweise auf die deutsche Offenlegungsschrift DE 10 2006 028 801 A1 hingewiesen, in der offenbart ist, dass eine Ventilationsbohrung in einem Lagerstuhl eines Kurbelgehäuses einer Hubkolben-Brennkraftmaschine durch Fräsen herstellbar ist.

Aus der amerikanischen Offenlegungsschrift US 2005/0045121 A1, von der die vorliegende Erfindung ausgeht, ist es ebenfalls bekannt, Ventilationsbohrungen in einem Lagerstuhl eines Kurbelgehäuses einer Hubkolben-Brennkraftmaschine durch Fräsen herzustellen. Hierbei wird ein Fräser von der Zylinderkopfseite aus schräg durch eine Zylinderbohrung in Richtung Lagerstuhl verfahren und anschließend die erste Seite der Ventilationsbohrung aus dem Lagerstuhl gefräst. Dann wird der Fräser abermals von der Zylinderkopfseite kommend schräg durch eine benachbarte Zylinderbohrung in Richtung desselben Lagerstuhls verfahren und anschließend die zweite Seite der Ventilationsbohrung in den Lagerstuhl gefräst.

DE 10 2008 058 583 A1 offenbart ein Verfahren zum Bearbeiten einer Gehäusewandung eines Kurbelgehäuses.

Nachteilig an dem Verfahren ist die notwendige Bearbeitung von zwei Seiten, was einen relativ hohen Fertigungsaufwand bedeutet. Des Weiteren entsteht bei dieser Bearbeitungsmethode eine spitze Verschnittgeometrie, die Spannungsspitzen (hohe innere Spannungen) im Kurbelgehäuse entstehen lassen und somit die Festigkeit des Kurbelgehäuses herabsetzen.

Aufgabe der vorliegenden Erfindung ist es, o. g. Nachteile zu vermeiden. Diese Aufgabe wird verfahrensmäßig durch die Merkmale im kennzeichnenden Teil des Patentanspruchs 1 und hardwaremäßig durch das Merkmal im kennzeichnenden Teil des Patentanspruchs 2 gelöst.

Mit dem erfindungsgemäßen Verfahren erfolgt die Bearbeitung der Ventilationsbohrungen in Richtung der Kurbelgehäuse-Längsachse (Motorlängsachse) und verhindert dadurch das Entstehen von Spannungsspitzen (hohe innere Spannung aufgrund von Kerbwirkung), da hierbei keine spitze Verschnittgeometrie (spitze Kanten) durch den Bearbeitungsverlauf der Werkzeuge entsteht. Darüber hinaus wird in vorteilhafter Weise die Ventilationsbohrung in nur noch einem einzigen Arbeitsgang gefertigt, wodurch der produktionstechnische Aufwand für die Fertigung der Ventilationsbohrung beinahe halbiert wird. Vorzugsweise erfolgt die Bearbeitung mit einem 90° Winkelkopf mit einem Fingerfräser, um weitere Spannungen möglichst zu minimieren.

Mit dem Verfahrensschritt gemäß Patentanspruch 1 ist es möglich, auch nicht runde Ventilationsbohrungen anzufertigen, die bezüglich des Ventilationsquerschnittes optimiert, d. h. größtmöglich ausgelegt sind.

Die Kurbelgehäuse gemäß dem Patentanspruch 2 weisen Ventilationsbohrungen mit einem optimierten Strömungsquerschnitt auf.

Das Kurbelgehäuse gemäß Patentanspruch 3 ist eine besonders bevorzugte Ausführungsform für das erfindungsgemäße Fertigungsverfahren. Das erfindungsgemäße Verfahren eignet sich ganz besonders für Kurbelgehäuse, deren Zylinderlaufflächen eine LDS-Beschichtung (Lichtbogendrahtspritzen) aufweisen. Besonders bevorzugt wird die Ventilationsbohrung derart ausgestaltet, dass die Geometrie der Ventilationsöffnung form- und festigkeitsoptimiert ausgeführt ist und damit die Deformation des Lagerstuhls und insbesondere der LDS-Schicht vermieden ist. Dadurch können Kolbenringe mit einer geringeren Kolbenringvorspannung eingesetzt werden, die aufgrund der geringeren Reibung zur Einsparung beim Kraftstoffverbrauch führen.

### Lichtbogendrahtspritzen:

Beim Lichtbogendrahtspritzen werden geschmolzene Eisenpartikel mit hoher Geschwindigkeit gegen eine Oberfläche geschleudert. Dieses thermische Verfahren wird beispielsweise zur Beschichtung von Laufbahnen von Leichtmetallzylindem im Kurbelgehäuse eingesetzt, was einen besonders reibungsarmen Betrieb garantiert. Es ersetzt damit die Laufbuchsen, die üblicherweise für eine widerstandsfähige Oberfläche der Zylinderlaufbahn sorgen.

Bei dem Lichtbogendrahtspritzen werden zwei stromführende Metalldrähte zusammengebracht. Sobald sie sich berühren, gibt es einen Kurzschluss. Durch die starke Erwärmung schmelzen die Drahtenden und das flüssige Metall wird mit Hilfe eines Gasstroms zerstäubt und versprüht. Die so beschleunigten Metallpartikel bilden schließlich eine dünne Schicht auf der Zylinderlaufbahn. Reibung und Verschleiß in der Hubkolben-Brennkraftmaschine sind dadurch deutlich vermindert. Durch das Wegfallen der Laufbuchsen wird ferner Platz eingespart, sowie zwischen 7 und 12 % Gewicht. Vorteilhaft ist zudem das Wärmeverhatten der Schicht: Sie leitet Hitze im Verbrennungsraum besser als eine Laufbuchse ab und trägt zu einer effizienteren Kühlung bei.

Im Folgenden ist die Erfindung anhand einer einzigen Figur näher erläutert.

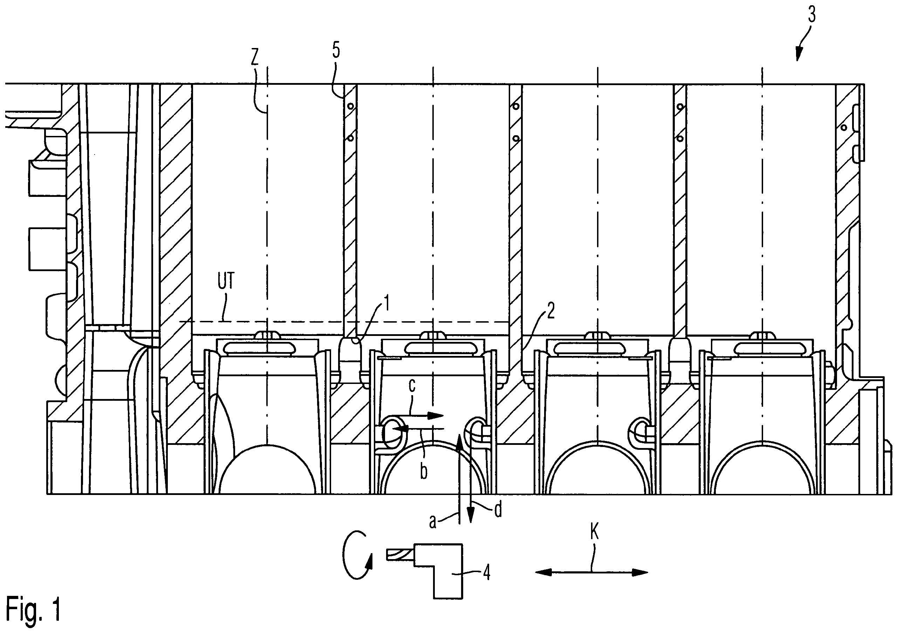

- Fig. 1: zeigt einen Schnitt durch ein erfindungsgemäß hergestelltes Kurbelgehäuse.

Fig. 1 zeigt einen Schnitt entlang einer Kurbelgehäuse-Längsachse (K) und einer Zylinder-Längsachse (Z) durch ein erfindungsgemäß hergestelltes Kurbelgehäuse 3. Das Kurbelgehäuse 3 ist beispielhaft für eine vierzylindrige Brennkraftmaschine dargestellt, was jedoch keine Limitierung darstellen soll, denn das erfindungsgemäße Verfahren kann für jedes beliebige Kurbelgehäuse zum Einsatz kommen.

Das Kurbelgehäuse 3 weist entsprechend vier Zylinder mit Zylinderlaufflächen 5 auf, wobei zwischen zwei benachbarten Zylindern jeweils ein Lagerstuhl 2 angeordnet ist. Im zweiten und im vierten Lagerstuhl 2 sind zwei einkreist dargestellte Ventilationsbohrungen 1 angeordnet. Jeder Zylinder weist eine strichpunktiert dargestellte Zylinder-Längsachse (Z) auf, das Kurbelgehäuse weist eine durch einen Doppelpfeil dargestellte Kurbelgehäuse-Längsachse (K) auf. Ein unterer Kolbentotpunkt (UT) ist gestrichelt dargestellt.

Das erfindungsgemäße Verfahren zur Herstellung der Ventilationsbohrung 1 in dem Lagerstuhl 2 des Kurbelgehäuses 3 einer Hubkolben-Brennkraftmaschine durch Fräsen mit einem schematisch dargestellten Fräser 4, weist folgende Verfahrensschritte auf:
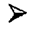 Einbringen des Fräsers 4, ein Winkelkopf-Fräser, in Richtung der Zylinder-Längsachse (Z) in das Kurbelgehäuse 3 (Pfeil a), und
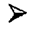 Verfahren des Fräsers 4 in Richtung der Kurbelgehäuse-Längsachse (K), bis der Lagerstuhl 2 durchbrochen ist (Pfeil b) und anschließend
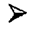 Rückverfahren des Fräsers 4 in Richtung der Kurbelgehäuse-Längsachse (K) (Pfeil c) und
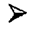 Ausbringen des Fräsers 4 aus dem Kurbelgehäuse 3 durch Verfahren des Fräsers 4 in Richtung der Zylinder-Längsachse (Z) (Pfeil d).

Mit Hilfe dieser erfindungsgemäßen Verfahrensschritte ist es möglich, kreisrunde Ventilationsbohrungen 1 in den Lagerstuhl 2 einzubringen.

Mit einem weiteren, erfindungsgemäßen Verfahrensschritt wird der Fräser 4, nachdem der Lagerstuhl 2 durchbrochen ist, in Richtung einer Ebene senkrecht zur Kurbelgehäuse-Längsachse (K) verfahren. Mit diesem zusätzlichen Verfahrensschritt ist es möglich, Ventilationsbohrungen 1 mit einem unrunden Querschnitt darzustellen. Damit kann in vorteilhafter Weise ein maximaler Strömungsquerschnitt für die Luft dargestellt werden, wodurch die Strömungsverluste deutlich reduziert und die Steifigkeit des Lagerstuhles und der Zylinderlaufflächen 5 erhöht werden.

Die Ventilationsbohrung 1 weist im Bereich des unteren Kolbentotpunktes (UT) einen abgeflachten Querschnitt auf. Damit ist es möglich, die Ventilationsbohrung 1 nahest möglich an den unteren Kolbentotpunkt (UT) heranzuführen und einen optimalen Strömungsquerschnitt zu erzielen. Besonders bevorzugt wird dies angewendet, wenn die Zylinderlaufflächen 5 eine LDS-Beschichtung (Lichtbogendrahtspritzen) aufweist. Diese Ausgestaltung gestattet es in vorteilhafter Weise, nur Kurbelgehäusematerial zu bearbeiten und keine Laufbahnbeschichtung, da dies aufgrund der sehr harten LDS-Schicht schlecht für die Standzeit der Werkzeuge ist.

Die Erfindung beschreibt somit die Ausgestaltung einer Ventilationsöffnung 1 so, dass die Geometrie der Ventilationsöffnung 1 form- und festigkeitsoptimiert ausgeführt ist und damit die Deformation des Lagerstuhls 2 und beispielsweise der LDS-Schicht vermieden werden kann. Dadurch können Kolbenringe mit einer geringeren Kolbenringvorspannung eingesetzt werden, die aufgrund der geringen Reibung zu Einsparungen beim Kraftstoffverbrauch führen. Am Beispiel einer 4-Zylinder-Hubkolben-Brennkraftmaschine werden nur die Hauptlager zwei und vier bearbeitet, um eine möglichst geringe Deformation zu bekommen. Eine Bearbeitung des Hauptlagers 3 ist aufgrund der höheren Kräfte nicht möglich. Die Bearbeitung erfolgt vorzugsweise mit einem 90° Winkelkopf mit Fingerfräser, um weitere Spannungen möglichst zu minimieren. Die Bearbeitung erfolgt in Richtung der Kurbelgehäuse-Längsachse (K) und verhindert dadurch das Entstehen von Spannungsspitzen (hohe innere Spannung aufgrund von Kerbwirkung), da hierbei keine spitze Verschnittgeometrie - wie aus dem Stand der Technik bekannt ist - durch den Bearbeitungsverlauf der Werkzeuge entsteht.

### Bezuqszeichentiste:

- 1.: Ventilationsbohrung
- 2.: Lagerstuhl
- 3.: Kurbelgehäuse
- 4.: Fräser
- 5.: Zylinderlauffläche

- Z: Zylinder-Längsachse
- K: Kurbelgehäuse-Längsachse
- UT: unterer Kolbentotpunkt

## Patentansprüche

1. Verfahren zur Herstellung einer Ventilationsbohrung (1) in einem Lagerstuhl (2) eines Kurbelgehäuses (3) einer Hubkolben-Brennkraftmaschine durch Fräsen mit einem Fräser (4), wobei der Fräser (4) ein Winkelkopf-Fräser ist,
**dadurch gekennzeichnet, dass**
der Fräser (4) in Richtung einer Zylinder-Längsachse (Z) in das Kurbelgehäuse (3) eingebracht wird und
in Richtung einer Kurbetgehäuse-Längsachse (K) verfahren wird, bis der Lagerstuhl (2) durchbrochen ist und
der Fräser (4) in Richtung einer Ebene senkrecht zur Kurbelgehäuse-Längsachse (K) verfahren wird nachdem der Lagerstuhl durchbrochen ist und
Rückverfahren des Fräsers (4) in Richtung der Kurbelgehäuse-Längsachse (K) und anschließend
Ausbringen des Fräsers (4) aus dem Kurbelgehäuse (3) durch Verfahren des Fräsers (4) in Richtung der Zylinder-Längsachse (Z).

2. Kurbelgehäuse hergestellt nach Patentanspruch 1,
**dadurch gekennzeichnet, dass** die Ventilationsbohrung (1) einen unrunden Querschnitt aufweist, wobei
die Ventilationsbohrung (1) im Bereich eines unteren Kolbentotpunktes (UT) einen abgeflachten Querschnitt aufweist.

3. Kurbelgehäuse hergestellt nach einem der Patentansprüche 1 oder 2, **dadurch gekennzeichnet, dass** eine Zylinderlauffläche (5) eine LDS-Beschichtung (**L**ichtbogen **D**raht **S**pritzen) aufweist.

## Claims

1. A method for producing a ventilation bore (1) in a thrust bearing (2) of a crankcase (3) of a reciprocating internal combustion engine by milling with a milling cutter (4), wherein the milling cutter (4) is an angular milling cutter,
**characterised in that**
the milling cutter (4) is introduced into the crankcase (3) in the direction of a cylinder longitudinal axis (Z), and
is moved in the direction of a crankcase longitudinal axis (K) until the thrust bearing (2) is perforated, and
the milling cutter (4) is moved in the direction of a plane perpendicular to the crankcase longitudinal axis (K) once the thrust bearing is perforated, and
moving the milling cutter (4) back in the direction of the crankcase longitudinal axis (K), and then
removing the milling cutter (4) from the crankcase (3) by moving the milling cutter (4) in the direction of the cylinder longitudinal axis (Z).

2. A crankcase produced according to Claim 1,
**characterised in that** the ventilation bore (1) has a non-round cross-section, wherein
the ventilation bore (1) has a flattened-off cross-section in the region of a bottom piston dead centre (UT).

3. A crankcase produced according to one of Claims 1 or 2,
**characterised in that** a cylinder running surface (5) has an LDS coating (wire arc spraying).

## Revendications

1. Procédé d'obtention d'un perçage de ventilation (1) dans un châssis de montage (2) du carter de vilebrequin (3) d'un moteur à combustion interne à pistons alternatifs par fraisage avec une fraise (4) cette fraise étant une fraise à tête d'angle,
**caractérisé en ce que**
la fraise (4) est introduite dans le carter de vilebrequin (3) dans la direction de l'axe longitudinal (Z) d'un cylindre, et
est déplacée dans la direction de l'axe longitudinal du carter de vilebrequin (K) jusqu'à ce que le châssis de montage (2) soit rompu, et
la fraise (4) est déplacée dans la direction d'un plan perpendiculaire à l'axe longitudinal (K) du carter de vilebrequin après que le châssis de montage ait été rompu,
la fraise (4) est redéplacée vers l'arrière dans la direction de l'axe longitudinal (K) du carter de vilebrequin, puis
la fraise (4) est extraite du carter de vilebrequin (3) en la déplaçant dans la direction de l'axe longitudinal (Z) du cylindre.

2. Carter de vilebrequin obtenu conformément à la revendication 1, **caractérisé en ce que**
le perçage de ventilation (1) à une section non circulaire, et
le perçage de ventilation (1) a une section aplatie dans la zone du point mort bas (UT) du piston.

3. Carter de vilebrequin obtenu conformément à l'une des revendications 1 ou 2,
**caractérisé en ce que**
la surface de glissement du cylindre (5) comporte un revêtement LDS (pulvérisation thermique à l'arc à fils).
